Europäisches Patentamt

(19) European Patent Office

Office européen des brevets

(11) Publication number: **0 086 884**
A2

# (12) EUROPEAN PATENT APPLICATION

(21) Application number: 82111275.2

(22) Date of filing: 06.12.82

(51) Int. Cl.³: **H 01 M 4/96**
H 01 M 8/02, C 04 B 35/54

(30) Priority: 22.02.82 US 351007

(43) Date of publication of application:
31.08.83 Bulletin 83/35

(84) Designated Contracting States:
AT BE CH DE FR GB IT LI LU NL SE

(71) Applicant: ELECTRIC POWER RESEARCH INSTITUTE, INC
3412 Hillview Avenue
Palo Alto California 94303(US)

(72) Inventor: Stonehart, Paul
34 Five Fields Road
Madison Connecticut 06443(US)

(74) Representative: von Füner, Alexander, Dr. et al,
Patentanwälte v. Füner, Ebbinghaus, Finck
Mariahilfplatz 2 & 3
D-8000 München 90(DE)

(54) Low temperature preparation of graphitized carbons using boron and silicon.

(57) A method for fabricating graphitized carbonaceous components for a fuel cell is provided wherein graphitized carbon contains at least one element from the group consisting of boron and silicon. The graphitized carbon containing components exhibit improved corrosion resistance at fuel cell operating temperatures.

EP 0 086 884 A2

## LOW TEMPERATURE PREPARATION OF GRAPHITIZED
## CARBONS USING BORON AND SILICON

The present invention is directed to a method for enhancing the corrosion resistance of carbonaceous components of a fuel cell. In particular the present invention is directed to a method for enhancing the corrosion resistance of carbonaceous components in a fuel cell by doping the carbon with boron or silicon and graphitizing the carbon by heating.

A typical fuel cell is an electrochemical cell comprising a matrix for holding electrolyte and an electrode disposed on each side of the matrix and in contact therewith. Reactant gases such as hydrogen as fuel and oxygen as oxidant may be fed to the nonelectrolyte facing side of each electrode. In a stack of fuel cells separator plates may be disposed between adjacent cells. Due to the low solubility of reactant gases, such as hydrogen and oxygen in electrolytes, the fuel cell reactions take place at the electrode-electrolyte interface. The required surface area at the interface is typically obtained utilizing porous materials which fulfill the functions of providing contact between electrolyte and gas, catalyzing the reaction, maintaining the electrolyte in a very thin area on the surface of the electrode, and acting as leads for the transmission of electrons.

In typical aqueous electrolyte fuel cells, several of the components may comprise carbonaceous material, such as the cathode, separator plates and current collectors. A particular problem in acid electrolyte fuel cells is that at operating temperatures, typically above 200° C, the carbonaceous components are particularly susceptible to corrosion. The frequency of replacement of such corroded carbonaceous components may be a major disadvantage of fuel cells which may make them less commercially attractive than other sources of electrical energy.

It is therefore an object of the present invention to provide a method for fabricating carbonaceous components for fuel cells which exhibit enhanced resistance to corrosion under fuel cell operating conditions.

It is a further object of the present invention to provide fuel cells which exhibit enhanced resistance to corrosion at operating temperatures and conditions.

In the accompanying drawings:

Figure 1 is a graph of $d_0$ (half the carbon cell unit c dimension) of heat-treated undoped and boron-doped graphitized carbon versus heat treatment temperature.

Figure 2 is a graph of $d_0$ heat-treated undoped and boron-doped graphitized carbon versus BET surface area.

Figure 3 is a graph of $d_0$ of heat-treated undoped and silicon-doped graphitized carbon versus heat treatment temperature.

Figure 4 is a graph of $d_0$ of heat-treated undoped and silicon-doped graphitized carbon versus BET surface area.

Figure 5 is a graph of Tafel slope versus $d_0$ for heat-treated undoped and silicon-doped graphitized carbons.

According to the present invention, carbonaceous components for fuel cells, in particular the cathodes, may be provided which exhibit enhanced resistance to corrosion by introducing boron or silicon into the carbonaceous material utilized in the fuel cell component. Subsequent heat treatment of the carbonaceous boron-containing or silicon-containing mixture produces graphitized carbon having enhanced corrosion resistance. Furthermore the degree of lattice ordering (hereinafter referred to as graphitization) which is achieved by the method according to the present invention is greater than the degree of graphitization which may be achieved by heat-treating the carbonaceous material in absence of boron or silicon. The closeness of approach for the lattice ordering ($d_0$) to $3.35\overset{\circ}{A}$ defines the degree of graphitization.

According to the present invention, boron may be introduced into carbonaceous material conventionally utilized in the production in components for fuel cells. Carbonaceous material such as carbon-black may be intimately mixed with a boric acid solution by ultrasonic agitation, forming a slurry which is then evaporated to dryness. The concentration of the boric acid solution and the proportions of the solution mixed with carbon are not particularly critical, however, slurries formed utilizing from about 80% to about 98% carbon by weight with 20% to 2% by weight boric acid in a 0.3M solution are preferred. The slurry may then be dried and the resulting mixed solids heated for approximately one hour at temperatures ranging from 1000-2000° C in an inert atmosphere. After the heat treatment the boron doped carbon may be rinsed, for example, in boiling distilled water to remove residual boric acid.

Heat treatment at a temperature sufficient to graphitize the carbons is necessary. Such a temperature may be as low as 1000° C. While at least 1600° C is preferred, heat treatment above 2500° C may provide improved graphitized carbon according to the present invention. However, temperatures less than about 2500° C are preferred.

It has been found that boron-doped carbon which has been heat treated as described above exhibits superior resistance to corrosion at fuel cell cathode operating conditions. Resistance to corrosion is particularly advantageous when the boron-doped carbon is heat treated from 1000° - 1600° C. The boron content of the heat treated graphitized carbon may vary depending on the rate of cooling. However, the degree of graphitization which occurs is not due only to heat treatment. The presence of boron is believed to be critical to achieving the degree of graphitization attainable according to the present invention.

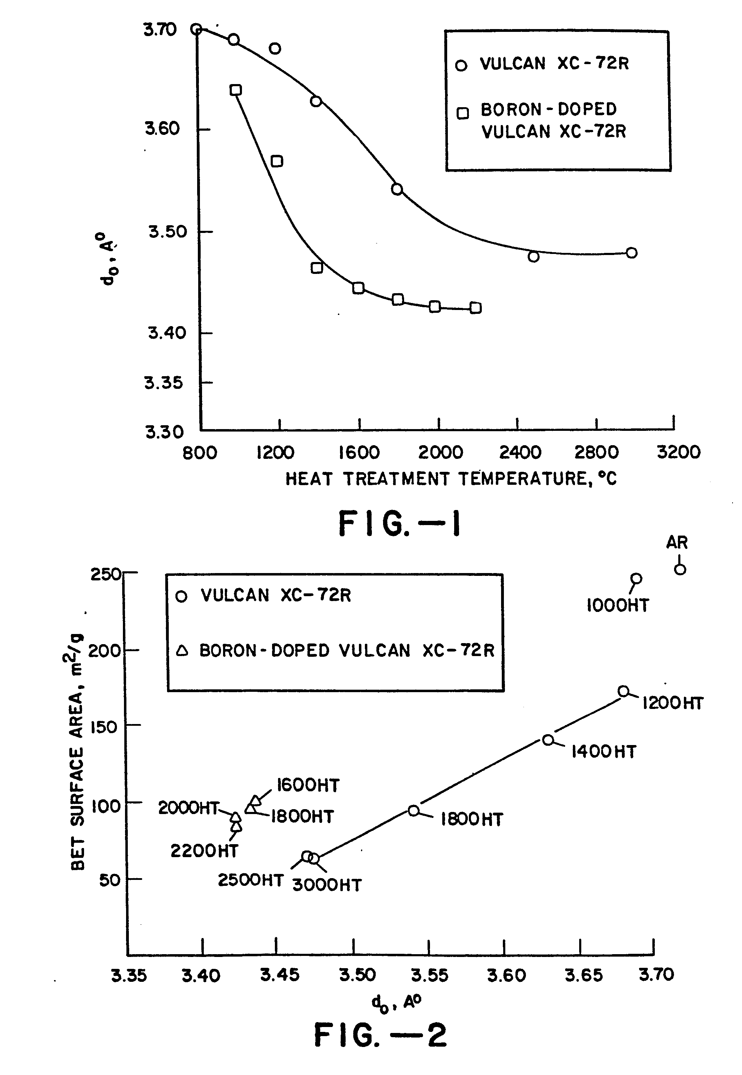

Referring to Figure 1, there is shown a plot of $d_0$ (half the carbon unit cell c dimension) versus the temperature of heat treatment for heat treated Vulcan (Cabot's Vulcan XC-72R) samples undoped or doped by boron. The value for $d_0$ for natural graphite is 3.35Å, therefore, it may be seen from Figure 1 that a higher degree of graphitization may be obtained by boron doping and heat treatment at a lower temperature rather than by heat treatment alone. Figure 1 shows that in heat treatments above 1400° C the boron-doped carbons have a $d_0$ less than 3.47 Å.

Referring to Figure 2, there is shown a plot of $d_0$ for heat treated Vulcan XC-72R and heat treated boron doped Vulcan XC-72R versus BET (Brunauer-Emmett-Teller method) surface areas. It may be seen from Figure 2 that the least graphitic boron-doped carbon which is that carbon treated at 1600° C having the $d_0$ which deviates most from

the value of 3.35Å has a higher BET surface area and a higher degree of graphitization than the most graphitic undoped carbon (which is the undoped carbon heat treated at approximately 3000°). As shown in Figure 2, all of the heat-treated boron-doped carbons have higher BET surface areas than the most graphitic undoped carbon. Thus, the achievement of substantially improved BET surface area is a further advantage of the present invention since it is advantageous to have the highest surface area possible in fuel cell components, particularly wherein the surface involves catalytic reactions.

Carbonaceous components of fuel cells exhibiting enhanced resistance to corrosion may also be provided according to the present invention by doping carbon with silicon and heat treating. According to the present invention carbon black which may be used in the manufacture of components for fuel cells may be slurried with fumed silicon oxide (Cabot's Cab-O-Sil). Alternatively, the carbon black may be impregnated with silicon by mixing with an aqueous solution of sodium silicate. Preferably, the carbon black may be slurried with fumed silicon oxide, evaporated to dryness and heat treated for approximately one hour at approximately 800° C in an inert atmosphere. If the impregnation method is used, the silicon impregnated carbon may be heated at 2300° C for approximately one hour in an inert atmosphere. In either method, subsequent to heat treatment the carbon may be boiled in aqueous sodium hydroxide to remove unreacted silicon oxide.

Heat treatment at a temperature sufficient to graphitize the carbon is necessary. Such temperature may be as low as 1400° C. A temperature of at least 1800° C is preferred. Heat treatment as temperatures greater than 1800° C may provide improved graphitized carbon according to the present invention, however, temperatures less than about 2500° C are preferred.

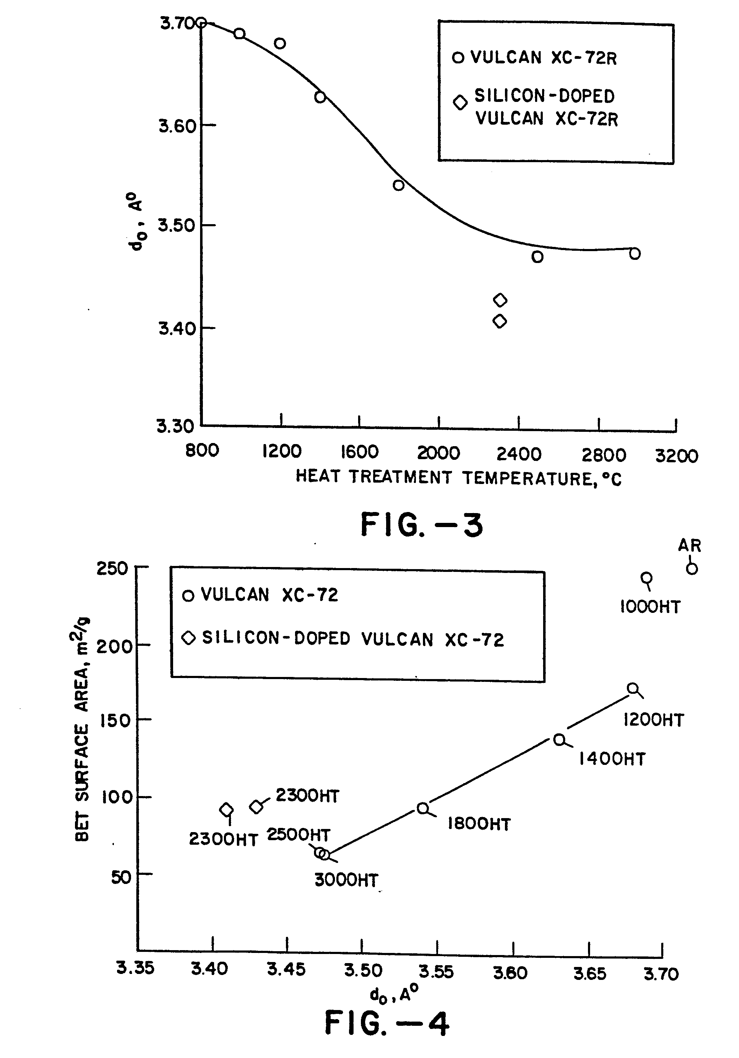

Referring to Figure 3, there is shown a plot of $d_0$ versus heat treatment temperatures for samples of turbostratic carbon black (Cabot's Vulcan XC-72R) made by slurrying with fumed silicon oxide. As may be seen from Figure 3, the silicon doped samples exhibit a $d_0$ value closer to 3.35 $\overset{o}{A}$ than the undoped samples, thereby indicating a higher degree of graphitization for the silicon doped samples.

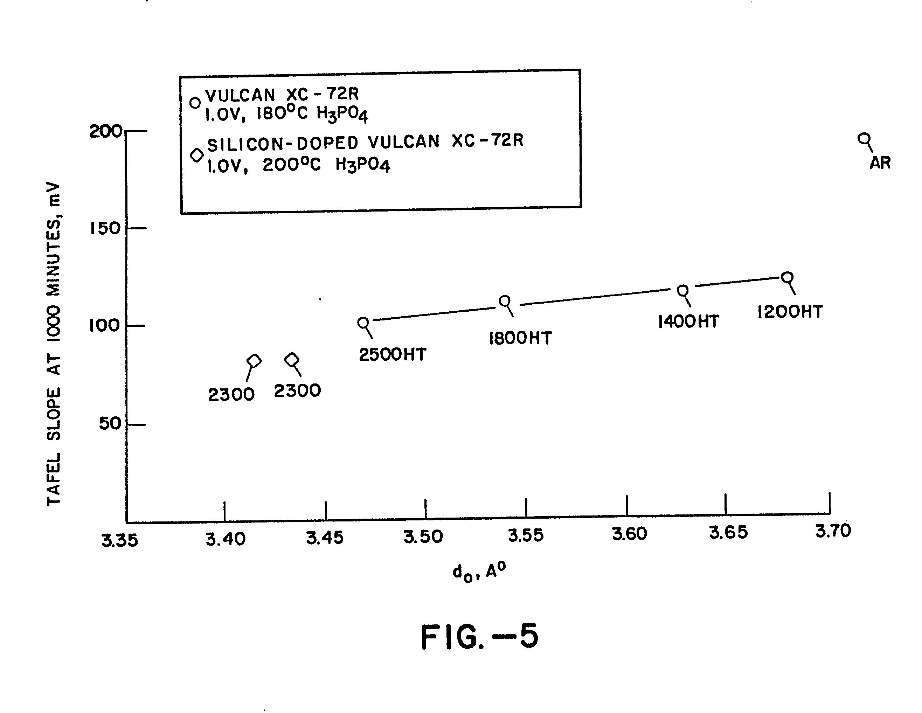

Referring to Figure 4, there is shown a plot of $d_0$ versus $d_0$ for silicon doped and undoped carbon samples. As may be seen from Figure 4, the silicon doped samples not only are more highly graphitized, but also exhibit a higher BET surface area than even the most graphitized undoped sample.

Referring to Figure 5, there is shown a plot of Tafel slopes (the slope of potential versus logarithm of current density) at 1000 minutes versus $d_0$ for heat treated undoped and silicon doped carbon. It may be seen from Figure 5, that the silicon doped carbon exhibits lower Tafel slopes than the undoped heat treated samples. A low value for the Tafel slope means that corrosion currents are lower at potentials of interest in fuel cells (0.65-0.8 V) than those for materials showing higher Tafel slopes.

Shown below in Table 1 is a summary of properties shown in Figures 3, 4 and 5 of silicon doped versus undoped carbon. Additionally, in Table 1 there is shown a comparison of corrosion resistance, as evidenced by the corrosion current at 1000 minutes. The corrosion test procedure is described by EPRI Publication No. EM-1664, p. A-1 (1981), published by the Electric Power Research Institute, Palo Alto, California 94303.

Table I:  Corrosion Characteristics of Silicon-Doped Vulcan
1.0V, 200° C, $H_3PO_4$

| Sample | BET Surface Area $m^2/g$ | Corrosion Current at 1000 min | | Tafel Slope | Graphitic Lattice Parameters c/2 |
|---|---|---|---|---|---|
| | | mA/mg | $mA/cm^2 \times 10^6$ | | |
| Si-doped Vulcan XC-72R 2300HT (A) | 92 | .0026 | 2.8 | 80 | 3.41 |
| Si-doped Vulcan XC-72R 2300HT (A) Duplicate | 92 | .0029 | 3.1 | 85 | 3.41 |
| Si-doped Vulcan XC-72R 2300HT (B) | 95 | .0019 | 2.0 | 80 | 3.43 |
| Si-doped Vulcan XC-72R 2300HT (B) Duplicate | 95 | .0025 | 2.6 | 85 | 3.43 |
| Vulcan XC-72R 2500HT | 65 | .0049 | 7.6 | 102 | 3.47 |

The heat treated silicon doped samples were tested for corrosion at one volt at 200° C in concentrated phosphoric acid.  The corrosion characteristics are shown in Table I above with the comparable corrosion characteristics for an undoped Vulcan XC-72R carbon sample which had been similarly heat treated.  In all instances the silicon doped carbon samples show significantly lower corrosion current (i at 1000 minutes) than the comparable heat treated carbon in the absence of silicon.  In addition, the silicon doped carbon samples exhibit a higher surface area retention (BET surface area) than the undoped carbon.

Samples of boron doped carbon were heat treated at various temperatures and the corrosion currents tested as shown in TABLE II.

-8-

Table II: Corrosion Currents 1000 Minutes for Heat Treated Boron Doped Carbons

| Heat Treat Temperature °C | Corrosion Currents at 1000 min, mA/mg | |
|---|---|---|
| | 1.0V, 165° C $H_3PO_4$ | 1.0V, 200° C $H_3PO_4$ |
| 1000 | .011 | .012 |
| 1200 | .0063 | .001 |
| 1400 | .0042 | .010 |
| 1600 | .0018 | .010 |
| 1800 | .0014 | .0075 |
| 2000 | .0016 | .0063 |
| 2200 | .0011 | .0036 |
| Vulcan XC-72R | .017 | .013 |
| Vulcan XC-72R 2500HT[1] | ----- | .005 |

[1]Heat treated at 2500° C in an inert environment

From Table II it may be seen that the boron doped carbons which were heat treated exhibit superior resistance to corrosion at fuel cell cathode operating conditions. Corrosion currents were monitored at 1 volt in both 165° and 200° C phosphoric acid. Corrosion currents at 1000 minutes are given in Table II. The values for undoped Vulcan XC-72R and Vulcan XC-72R 2500HT are included for a comparison. It may be seen from Table II that, although resistance to corrosion in the heat treated boron doped samples improves with higher temperature of heat treatment, treatments above 1600° C exhibit only small improvements.

WHAT IS CLAIMED IS:

1. A method of fabricating a graphitized carbon containing component for an electrochemical fuel cell comprising the steps of;

       a) intimately mixing carbon with an aqueous solution of boric acid;

       b) removing water from the mixture from step a);

       c) heating the mixture from step b) in an inert atmosphere at a temperature sufficient to graphitize said mixture.

2. A method according to Claim 1 wherein step c) is performed at a temperature in the range 1000° to 2500° C.

3. A method for fabricating a graphitized carbon containing component for an electrochemical fuel cell comprising the steps of;

       a) intimately mixing carbon with an aqueous solution of silicon oxide;

       b) removing water from the mixture from step a);

       c) heating the mixture from step b) in an inert atmosphere at a temperature sufficient to graphitize said mixture.

4. A method according to Claim 3 wherein said step c) is performed at a temperature range of 1400° to 2500° C.

5. A method for fabricating a graphitized carbon containing component for an electrochemical fuel cell comprising the steps of;

       a) intimately mixing carbon with an aqueous solution of sodium silicate;

       b) removing water from the mixture from step a);

       c) heating the dry mixture from step b) in an inert atmosphere at a temperature sufficient to graphitize said mixture.

6. A method according to Claim 5 wherein said step c) is performed at a temperature with the range of 1400° C to 2500° C.

7. In an electrochemical fuel cell, the improvement comprising a carbonaceous component comprising graphitized carbon and an element from the group consisting of silicon and boron.

8. A fuel cell according to Claim 7 wherein said graphitized carbon is characterized by a half unit cell c dimension of less than 3.47 Å.

9. A fuel cell according to Claim 8 wherein said component is a cathode.

10. A fuel cell according to Claim 8 wherein said component is a current collector.

11. A fuel cell according to Claim 8 wherein said component is a separator plate.

FIG.—1

FIG.—2

EPA-30440/0086884

FIG. -3

FIG. -4

FIG.-5